# EUROPÄISCHE PATENTSCHRIFT

(11) **EP 3 362 338 B1**
(45) Veröffentlichungstag und Bekanntmachung des Hinweises auf die Patenterteilung: **17.06.2020**
(21) Anmeldenummer: 16775728.5
(22) Anmeldetag: 04.10.2016
(51) Int. Cl.: B62H 5/00, B60R 25/24, B62H 5/20, B62H 5/08

(54) **ELEKTROFAHRRAD, WEGFAHRSPERRE FÜR EIN ELEKTROFAHRRAD UND VERFAHREN ZUM BETRIEB EINES ELEKTROFAHRRADES**
ELECTRIC BICYCLE, IMMOBILIZER FOR AN ELECTRIC BICYCLE, AND METHOD FOR OPERATING AN ELECTRIC BICYCLE
VÉLO ÉLECTRIQUE, SYSTÈME D'IMMOBILISATION POUR VÉLO ÉLECTRIQUE ET PROCÉDÉ PERMETTANT DE FAIRE FONCTIONNER UN VÉLO ÉLECTRIQUE

(30) Priorität: 15.10.2015 DE 102015220084
(43) Veröffentlichungstag der Anmeldung: 22.08.2018
(73) Patentinhaber: Conti Temic Microelectronic GmbH, 90411 Nürnberg (DE)
(72) Erfinder: MAI, Wolfgang, 61476 Kronberg im Taunus (DE); LUDWIG, Wolfgang, 35510 Butzbach-Maibach (DE); HILD, Rainer, 35792 Löhnberg (DE)
(74) Vertreter: Bonn, Roman Klemens
(86) Internationale Anmeldenummer: PCT/EP2016/073687
(87) Internationale Veröffentlichungsnummer: WO 2017/063918

(56) Entgegenhaltungen:
- JP-A- 2007 331 725
- US-A1- 2006 007 003
- US-A1- 2012 146 429
- US-A1- 2014 097 672
- US-A1- 2015 116 081

## Beschreibung

### Gebiet der Technik

Die Erfindung betrifft ein Elektrofahrrad, insbesondere ein Pedelec oder ein sog. E-Bike, umfassend einen Elektromotor und einen elektrischen Energiespeicher, bei dem es sich vorzugsweise um einen Akkumulator handelt, zur Energieversorgung des Elektromotors.

### Stand der Technik

Fahrräder werden immer öfter mit elektrischen Hilfsmotoren ausgerüstet, um den Fahrer beim Fahren zu unterstützen (Pedelec) . Dabei werden meist Elektromotoren am Tretlager oder in den Achsen der Räder angebracht. Zur Speicherung von elektrischer Energie zum Betreiben der Elektromotoren werden in der Regel Akkus am Unterrohr oder am Gepäckträger angebracht, die in der Regel einen Mikrocontroller zur Laderegelung enthalten. Bisweilen befindet sich am Lenker eine Einheit zur Anzeige des Füllstandes des Akkus und zum Einstellen der Betriebsart, die sich je nach Ausführung auch ab- und anstecken lässt. Des Weiteren finden elektronische Regeleinheiten Anwendung, um den Elektromotor bedarfsgerecht und angepasst an den Fahrer und an den Fahrzustand anzupassen. Eine Regeleinheit kann einen Mikrocontroller zur Steuerung und Regelung enthalten. Eine solche Regeleinheit kann, vor allem bei Antrieben am Tretlager, mit dem Motor in einer Antriebseinheit vereint werden. Elektrofahrräder, also Fahrräder mit elektrischen Hilfsmotor (Pedelecs) und sog. E-Bikes, erfreuen sich einer wachsenden Beliebtheit. Allerdings besitzen Elektrofahrräder ein Vielzahl von teuren Komponenten, die sich wie z.B. der Akku leicht entwenden lassen. Damit sind Elektrofahrräder als Ganzes, aber auch einzelne Komponenten von ihnen, besonders diebstahlgefährdet. Ein Diebstahlschutz wird bei Fahrrädern herkömmlich durch ein entsprechend stabiles, aber auch schweres und teures Schloss gewährleistet. Der Fahrer muss aber das Schloss separat mit sich führen. Auch können mechanische Schlösser durch mechanische Einwirkung je nach Ausführung in bestimmter Zeit gewaltsam geöffnet werden.

Aus der Automobiltechnik sind elektronische Wegfahrsperren bekannt. DE 10 2012 217 775 A1 schlägt als elektronische Wegfahrsperre für ein Elektrofahrrad eine Authentifizierungseinheit zur Authentifizierung eines zur Benutzung des Fahrzeuges autorisierten Nutzers und zur Erzeugung eines Freigabesignals nach erfolgreicher Authentifizierung vor. DE 10 2012 004 176 A1 offenbart eine Diebstahlsicherung für ein Elektrofahrrad. Diese umfasst eine Steuereinrichtung, die dazu vorgesehen ist, über ein Endgerät empfangene Signale auszuwerten, um zumindest eine Funktion der Antriebseinheit in Abhängigkeit zumindest eines empfangenen Signals entweder freizugeben oder zu sperren oder zu blockieren. Das Endgerät ist dabei nicht als Teil der Steuereinrichtung ausgebildet, sondern ist autark von der Steuereinrichtung, insbesondere als mobiles und vom Anwender mitführbares Endgerät ausgebildet. Beide Veröffentlichungen beziehen sich somit auf eine Bedieneinheit, über welche die Freigabe einer Steuereinheit/Motoreinheit erfolgt. Dokument US 2014/097672 A1 offenbart den Oberbegriff des Anspruchs 1.

### Zusammenfassung der Erfindung

Davon ausgehend liegt der Erfindung die Aufgabe zugrunde, ein Elektrofahrrad im Hinblick auf einen Diebstahlschutz vorteilhaft weiterzubilden.

Zur Lösung der Aufgabe schlägt die Erfindung gemäß einem ersten Aspekt vor, dass das Elektrofahrrad eine erste Steuereinrichtung aufweist, die an den Elektromotor gekoppelt ist und die dazu ausgebildet ist, einen ersten Schlüsselcode zu speichern, dass das Elektrofahrrad eine zweite Steuereinrichtung aufweist, die an den Energiespeicher gekoppelt ist, und die dazu ausgebildet ist, einen zweiten Schlüsselcode zu speichern, dass das Elektrofahrrad eine Anzeige-/Bedieneinheit und eine daran gekoppeltes dritte Steuereinrichtung, die zur Speicherung eines dritten Schlüsselcodes ausgebildet ist, umfasst, dass die Steuereinrichtungen an ein Datenübertragungssystem, dass insbesondere mittels eines Bus realisiert ist, angeschlossen oder anschließbar sind, und dass die erste Steuereinrichtung und die zweite Steuereinrichtung und die dritte Steuereinrichtung dazu ausgebildet sind, dass an zumindest eine unter ihnen bestimmte Steuereinrichtung von den beiden anderen Steuereinrichtungen deren jeweiliger Schlüsselcode übertragen wird, wobei die zumindest eine bestimmte Steuereinrichtung dazu ausgebildet ist, anhand vorgegebener Kriterien zu erkennen, ob ihr Schlüsselcode zu den an sie übertragenen Schlüsselcodes der beiden anderen Steuereinrichtungen passt. Dass die erste und die zweite und die dritte Steuereinrichtung dazu ausgebildet sind, dass an zumindest eine unter ihnen bestimmte Steuereinrichtung von den beiden anderen Steuereinrichtungen deren jeweiliger Schlüsselcode übertragen wird, lässt verschiedene Möglichkeiten zu. Es besteht z.B. die Möglichkeit, das nur eine der Steuereinrichtungen dazu bestimmt ist, von den beiden anderen Steuereinrichtungen deren Schlüsselcode übertragen zu bekommen. Alternativ besteht z.B. die Möglichkeit, dass zwei von den drei Steuereinrichtungen bestimmt sind, um von den jeweils beiden anderen Steuereinrichtungen deren Schlüsselcode übertragen zu bekommen; zum Beispiel könnte die erste Steuereinrichtung bestimmt sein, von der zweiten und der dritten Steuereinrichtung deren Schlüsselcode übertragen zu bekommen und die dritte Steuereinrichtung könnte bestimmt sein, von der ersten und der zweiten Steuereinrichtung deren Schlüsselcode übertragen zu bekommen. Alternativ besteht z.B. die Möglichkeit, dass alle Steuereinrichtungen bestimmt sind, von den jeweils anderen Steuereinrichtungen deren Schlüsselcode übertragen zu bekommen.

Bei dem ersten Aspekt der Erfindung sind die erste Steuereinrichtung, die zweite Steuereinrichtung und die dritte Steuereinrichtung Bestandteile einer Wegfahrsperre für ein Elektrofahrrad, insbesondere für ein Pedelec. Einen weiteren Bestandteil der Wegfahrsperre bildet jeweils vorzugsweise ein Bussystem, das zweckmäßig einen Datenbus aufweist. Weitere Bestandteile der Wegfahrsperre für das Elektrofahrrad können z.B. ein mit der ersten Steuereinrichtung verbundener Elektromotor und/oder ein mit der zweiten Steuereinrichtung verbundener Energiespeicher und/oder eine mit der dritten Steuereinrichtung verbundene Anzeige-/Bedieneinheit sein, an der sich z.B. der Füllstand des Energiespeichers ablesen und/oder bestimmte Betriebsarten des Elektrofahrrades einstellen lässt. Eine derartige Wegfahrsperre kann zum Beispiel zum Nachrüsten an einem Elektrofahrrad verwendet werden.

Die Erfindung betrifft eigenständig eine Wegfahrsperre für ein Elektrofahrrad, insbesondere für ein Pedelec oder für ein E-Bike, aufweisend: eine erste Steuereinrichtung, die an einen Elektromotor gekoppelt oder koppelbar ist und die dazu ausgebildet ist, einen ersten Schlüsselcode zu speichern, und eine zweite Steuereinrichtung, die an einen Energiespeicher für den Elektromotor gekoppelt oder koppelbar ist und die dazu ausgebildet ist, einen zweiten Schlüsselcode zu speichern, wobei die beiden Steuereinrichtungen an ein Datenübertragungssystem, z.B. an einen Bus, angeschlossen oder anschließbar sind und wobei die erste Steuereinrichtung und die zweite Steuereinrichtung dazu ausgebildet sind, dass an zumindest eine unter ihnen bestimmte Steuereinrichtung von der anderen Steuereinrichtung deren Schlüsselcode übertragen wird, wobei die zumindest eine bestimmte Steuereinrichtung dazu ausgebildet ist, anhand vorgegebener Kriterien zu erkennen, ob ihr Schlüsselcode zu dem an sie übertragenen Schlüsselcode der anderen Steuereinrichtung passt.

Des Weiteren betrifft die Erfindung eine Wegfahrsperre für ein Elektrofahrrad, insbesondere für ein Pedelec oder für ein E-Bike, aufweisend: Eine erste Steuereinrichtung, die an einen Elektromotor gekoppelt oder koppelbar ist und die dazu ausgebildet ist, einen ersten Schlüsselcode zu speichern, eine zweite Steuereinrichtung, die an einen Energiespeicher, vorzugsweise an einen Akkumulator, koppelbar oder gekoppelt ist, und die dazu ausgebildet ist, einen zweiten Schlüsselcode zu speichern, und eine dritte Steuereinrichtung , die an eine Anzeige-/Bedieneinheit für ein Elektrofahrrad koppelbar oder gekoppelt ist und die zur Speicherung eines dritten Schlüsselcodes ausgebildet ist, wobei die Steuereinrichtungen an ein Datenübertragungssystem, z.B. an einen Bus, anschließbar oder angeschlossen sind, wobei die erste Steuereinrichtung und die zweite Steuereinrichtung und die dritte Steuereinrichtung dazu ausgebildet sind, dass an zumindest eine unter ihnen bestimmte Steuereinrichtung von den beiden anderen Steuereinrichtungen deren jeweiliger Schlüsselcode übertragen wird, und wobei die zumindest eine bestimmte Steuereinrichtung dazu ausgebildet ist, anhand vorgegebener Kriterien zu erkennen, ob ihr Schlüsselcode zu den an sie übertragenen Schlüsselcodes der beiden anderen Steuereinrichtungen passt.

Allen Aspekten der Erfindung ist der Lösungsgedanke gemeinsam, dass die Steuereinrichtungen in gewissem Umfang Schlüsselcodes übertragen bzw. ggf. miteinander austauschen und nach vorgegebenen Kriterien auswerten bzw. prüfen, ob die Schlüsselcodes zueinander passen oder nicht, und dass nur bei zueinander passenden Schlüsselcodes, also nur bei einem zueinander passenden Verbund von Steuereinrichtungen, bestimmte für den Betrieb des Elektrofahrrades benötigte Funktionen freigegeben werden. Zu diesem Zweck können die Steuereinrichtungen über ein gemeinsames Datenübertragungssystem, das bspw. mittels eines Bussystems verwirklicht sein kann, kommunizieren. Dabei macht sich die Erfindung zunutze, dass bei einem Pedelec häufig drei Steuergeräte vorhanden sind: eine Antriebseinheit, eine Batterie oder Akkumulator (Energiespeicher) und eine Anzeige-/Bedieneinheit. Diese Steuergeräte bzw. ihnen zugeordnete Steuereinrichtungen, die mittels Hard- und/oder Software ausgebildet sein können, können z.B. über einen Datenbus kommunizieren. Die Erfindung ermöglicht es, dass die Komponenten nur in einem Verbund aus jeweils zueinander passenden Schlüsselcodes arbeiten. Folglich lohnt sich der der Diebstahl einzelner Komponenten, wie z.B. eines Akkus, nicht, da dieser Akku z.B. nicht mit einer anderen Anzeige-/Bedieneinheit, die einen unpassenden Schlüsselcode aufweist, funktionieren würde. Eine Anzeige-/Bedieneinheit an einem Lenker des Elektrofahrrads ist häufig abnehmbar. Nimmt der Fahrer nach der Fahrt die Anzeige-/Bedieneinheit mit, ergibt sich ebenfalls eine einfache Diebstahlsicherung für das gesamte Fahrrad. Der Gegenstand von Anspruch 1 geht von zumindest zwei Steuereinrichtungen aus, von denen eine erste an den Elektromotor und eine zweite an den Energiespeicher gekoppelt ist. Diese Steuereinheiten können entweder einseitig oder gegenseitig ihren Schlüsselcode aneinander übertragen. Die oder jede der einen Schlüsselcode empfangenden Steuereinheiten kann prüfen, ob die Schlüsselcodes zueinander passen. Auf diese Weise lässt sich eine von dieser Bedingung abhängige Freigabe zwischen der Motorsteuerung und der Batterie bzw. dem Energiespeicher realisieren, auch ohne dass eine Anzeige-/Bedieneinheit vorgesehen oder in den Diebstahlschutz einbezogen ist.

Der Gegenstand von Anspruch 2 beinhaltet darüber hinaus auch eine Anzeige-/Bedieneinheit und eine daran gekoppelte dritte Steuereinrichtung. Die Grundidee liegt darin, dass alle an dem Diebstahlschutz beteiligten Komponenten, einschließlich des Energiespeichers, untereinander in festgelegtem Umfang Schlüsselcodes übertragen, insbesondere diese untereinander gegenseitig austauschen können. Die Erfindung ermöglicht, dass zumindest eine oder mehrere oder sämtliche der beteiligten Komponenten (also insbesondere Elektromotor und Energiespeicher und ggf. Anzeige-/Bedieneinheit) nur bei zueinander passenden Schlüsselcodes funktionieren. Damit wird wirkungsvoll der Diebstahl von Komponenten (vor allem der teuren Batterie) verhindert. Neben einem Diebstahlschutz einzelner Komponenten resultiert durch das Entfernen von z.B. einer Komponente (z.B. der Batterie oder der Anzeige-/Bedieneinheit) zusätzlich ein Diebstahlschutz für die restlichen Komponenten oder für das ganze Elektrofahrrad.

Ein elektronischer Diebstahlschutz macht gestohllene Fahrräder wertlos. Der Diebstahlschutz lässt sich einfach und ohne Mehrgewicht in bestehende Komponenten integrieren. Der Diebstahlschutz ist komfortabel für den Fahrradfahrer.

Die jeweiligen Schlüsselcodes könnten auch als Identifizierungscodes oder als Freigabecodes bezeichnet werden. Vorzugsweise sind die jeweiligen Steuereinrichtungen dazu ausgebildet, Schlüsselcodes auswechselbar abzuspeichern. Dies eröffnet die Möglichkeit, dass sich die an dem Diebstahlschutz beteiligten Komponenten bzw. Steuereinrichtungen durch autorisierte Werkstätten über vorhandene Diagnoseschnittstellen aufeinander anlernen lassen, indem in den Steuereinrichtungen zueinander passende Schlüsselcodes abgespeichert werden. Die jeweiligen Steuereinrichtungen können z.B. einen Chip, einen Mikrocontroller, Software oder dergleichen aufweisen. Sie können je nach Funktion geeignete Mittel zum Speichern, zum Senden, zum Empfangen von Daten und/oder Mittel zur Signalverarbeitung, insbesondere zum Erkennen von Schlüsselcodes, aufweisen. Je nach Ausführung könnte man die Steuereinrichtungen auch als Steuergeräte oder als Teil von Steuergeräten bezeichnen. Die vorgegebenen Kriterien zur Prüfung, ob Schlüsselcodes zueinander passen, können in den Steuereinrichtungen z.B. als Hard- und/oder Software implementiert sein.

Es bestehen zahlreiche weitere Möglichkeiten zur bevorzugten Weiterbildung:
So kann z.B. die erste Steuereinrichtung je nach Ausführung auch zum Steuern und/oder Regeln des Elektromotors geeignet sein und/oder mit einer hierzu geeigneten, gesonderten Motorsteuerung bzw. -regelung verbunden sein.

Es besteht die Möglichkeit, dass nur eine der Steuereinrichtungen dazu bestimmt ist, um die Schlüsselcodes miteinander zu vergleichen. Zum Beispiel kann es sich bei der dazu bestimmten Steuereinrichtung um die erste oder um die zweite oder um die dritte Steuereinrichtung handeln. Alternativ besteht die Möglichkeit, dass mehrere der an der Diebstahlsicherung beteiligten Steuereinrichtungen dazu bestimmt sind, jeweils die Schlüsselcodes miteinander zu vergleichen. Wenn z.B. nur zwei Steuereinrichtungen mittels des Datenübertragungssystems miteinander kommunizieren, besteht zum Beispiel die Möglichkeit, dass an eine jede Steuereinrichtung (also an die erste Steuereinrichtung und an die zweite Steuereinrichtung) von der jeweils anderen Steuereinrichtung deren Schlüsselcode übertragen wird, wobei jede Steuereinrichtung dazu ausgebildet ist, anhand vorgegebener Kriterien zu erkennen, ob ihr Schlüsselcode zu dem an sie übertragenen Schlüsselcode der anderen Steuereinrichtung passt. Wenn drei Steuereinrichtungen mittels des Datenübertragungssystems miteinander kommunizieren, besteht zum Beispiel die Möglichkeit, dass an eine jede Steuereinrichtung (d.h. an die erste Steuereinrichtung, an die zweite Steuereinrichtung und an die dritte Steuereinrichtung) von den jeweils beiden anderen Steuereinrichtungen deren Schlüsselcode übertragen wird, wobei jede Steuereinrichtung dazu ausgebildet ist, anhand vorgegebener Kriterien zu erkennen, ob ihr Schlüsselcode zu den an sie übertragenen Schlüsselcodes der anderen Steuereinrichtungen passt. Dies bietet insbesondere die Möglichkeit, auf einen gesonderten Verriegelungsmechanismus für den Energiespeicher und/oder auf einen gesonderten Verriegelungsmechanismus für eine Anzeige-/Bedieneinheit zu verzichten.

Es besteht die Möglichkeit, dass die erste Steuereinrichtung dazu ausgebildet ist, ein Steuersignal zu erzeugen, das Information enthält, ob ihr Schlüsselcode zu dem an sie übertragenen Schlüsselcode oder zu den an sie übertragenen Schlüsselcodes passt, und das Steuersignal entweder an eine Master-Steuereinrichtung oder zur Steuerung, insbesondere zum Ein- oder Ausschalten, an den Elektromotor zu übertragen. Alternativ oder kombinativ besteht die Möglichkeit, dass die zweite Steuereinrichtung dazu ausgebildet ist, ein Steuersignal zu erzeugen, das Information enthält, ob ihr Schlüsselcode zu dem an sie übertragenen Schlüsselcode oder zu den an sie übertragenen Schlüsselcodes passt, und das Steuersignal entweder an eine Master-Steuereinrichtung oder zur Steuerung, insbesondere zum Ein- oder Ausschalten, an den Energiespeicher zu übertragen. Wenn das Elektrofahrrad eine dritte Steuereinrichtung aufweist, besteht alternativ oder kombinativ die Möglichkeit, dass die dritte Steuereinrichtung dazu ausgebildet ist, ein Steuersignal zu erzeugen, das Information enthält, ob ihr Schlüsselcode zu dem an sie übertragenen Schlüsselcode oder zu den an sie übertragenen Schlüsselcodes passt, und das Steuersignal entweder an eine Master-Steuereinrichtung oder zur Steuerung, insbesondere zum Ein- oder Ausschalten, an die Anzeige-Bedieneinheit zu übertragen.

Als zweckmäßig wird angesehen, dass die Master-Steuereinrichtung dazu ausgebildet ist, zu erkennen, ob ein an sie übertragenes Steuersignal Information enthält oder ob alle an sie übertragenen Steuersignale jeweils Information enthalten, dass alle Schlüsselcodes zueinander passen, und nur in diesem Fall eine Freischaltung des Elektromotors und/oder des Energiespeichers und/oder der Anzeige-/Bedieneinheit für den Betrieb des Elektrofahrrades zu veranlassen. Es besteht insbesondere die Möglichkeit, dass es sich bei der Master-Steuereinheit um die erste oder die zweite oder die dritte Steuereinrichtung handelt oder um eine von der ersten, zweiten und dritten Steuereinrichtung gesonderte Steuereinrichtung. Es besteht die Möglichkeit, dass die Master-Steuereinrichtung dazu ausgebildet ist, zu erkennen, ob ein an sie übertragenes Steuersignal Information enthält oder ob alle an sie übertragenen Steuersignale jeweils Information enthalten, dass alle Schlüsselcodes zueinander passen, und anderenfalls zu veranlassen, dass die erste Steuereinrichtung ein Bremsdrehmoment des Elektromotors bewirkt, und/oder zu veranlassen, dass eine Warnsignalerzeugungseinrichtung des Elektrofahrrades, die insbesondere eine Lichtquelle, eine Tonquelle, ein Funkquelle oder dergleichen enthält, ein Warnsignal aussendet. Wird eine nicht autorisierte Benutzung erkannt, kann die Master-Steuereinrichtung, die sich z.B. mit der Anzeige-/Bedien-einheit in einem gemeinsamen Gehäuse befinden kann, z.B. den Elektromotor veranlassen, das Fahren mit einem Gegen-/Bremsmoment zu verhindern. Alternativ oder kombinativ kann eine unerlaubte Benutzung über ein akustisches Signal angezeigt werden.

Ein wirksamer Diebstahlschutz kann dadurch erreicht werden, dass die erste Steuereinrichtung und der Elektromotor in einem ihnen gemeinsamen Gehäuse angeordnet sind und/oder dass die zweite Steuereinrichtung und der Energiespeicher in einem ihnen gemeinsamen, insbesondere lösbar an dem Rahmen des Elektrofahrrads angebrachten, Gehäuse angeordnet sind und/oder dass die dritte Steuereinrichtung und die Anzeige-/Bedieneinheit in einem ihnen gemeinsamen, insbesondere lösbar an dem Rahmen oder dem Lenker des Elektrofahrrads angebrachten, Gehäuse angeordnet sind.

Als zweckmäßig wird angesehen, dass das Elektrofahrrad eine Datenschnittstelle aufweist, die an das Datenübertragungssystem angeschlossen ist oder anschließbar ist und die dazu ausgebildet ist, Schlüsselcodes wahlweise aus Steuereinrichtungen auszulesen oder darin abzuspeichern. Dies erleichtert ein sog. "Anlernen" der an dem Diebstahlschutz beteiligten Komponenten bzw. Steuereinrichtungen des Elektrofahrrades aneinander. Als zweckmäßig wird auch angesehen, dass das Elektrofahrrad ein wahlweise ein- und ausschaltbares Stromversorgungssystem für die erste Steuereinrichtung, die zweite Steuereinrichtung und insbesondere für die dritte Steuereinrichtung aufweist.

Die Erfindung betrifft des Weiteren auch ein Verfahren zum Betrieb eines Elektrofahrrades. Ausgehend von dem beschriebenen Stand der Technik liegt der Erfindung insofern die Aufgabe zugrunde, ein solches Verfahren im Hinblick auf einen Diebstahlschutz zu verbessern.

Zur Lösung schlägt die Erfindung vor, dass das Verfahren die Verfahrensschritte aufweist:
- Bereitstellen eines Elektrofahrrades gemäß einem oder mehreren der vorangehenden Ansprüche,
- Verwenden der Steuereinrichtungen zur Prüfung, ob ihre Schlüsselcodes zueinander passen.

Auch insofern bestehen zahlreiche Möglichkeiten zur bevorzugten Weiterbildung:

Bevorzugt ist, dass das Verfahren vor der Prüfung, ob die Schlüsselcodes zueinander passen, den Verfahrensschritt umfasst:
- Anschließen der zweiten Steuereinrichtung und/oder der dritten Steuereinrichtung an das Datenübertragungssystem. Es besteht die Möglichkeit, dass das Verfahren den Verfahrensschritt umfasst:
- Bereitstellen eines Datendiagnosegerätes, Anschließen des Datendiagnosegerätes an die Datenschnittstelle und Auslesen von zumindest einem Schlüsselcode aus einer Speichereinrichtung oder aus mehreren Speichereinrichtungen, und/oder
- Bereitstellen eines Dateneingabegerätes, Anschließen des Dateneingabegerätes an die Datenschnittstelle und Eingeben von zumindest einem Schlüsselcode in eine Speichereinrichtung oder in mehrere Speichereinrichtungen. Diese Verfahrensschritte könnte man auch als ein "Anlernen" der Steuereinrichtungen aufeinander bezeichnen.

### Kurze Beschreibung der Zeichnungen

Die Erfindung wird nachfolgend exemplarisch mit Bezug auf die beigefügten Figuren, welche bevorzugte Ausführungsbeispiele zeigen, beschrieben. Es zeigt:
- Fig. 1: ein erfindungsgemäßes Elektrofahrrad gemäß einem ersten Ausführungsbeispiel in einer Seitenansicht, und
- Fig. 2: ein erfindungsgemäßes Elektrofahrrad gemäß einem zweiten Ausführungsbeispiel.

### Beschreibung der Ausführungsformen

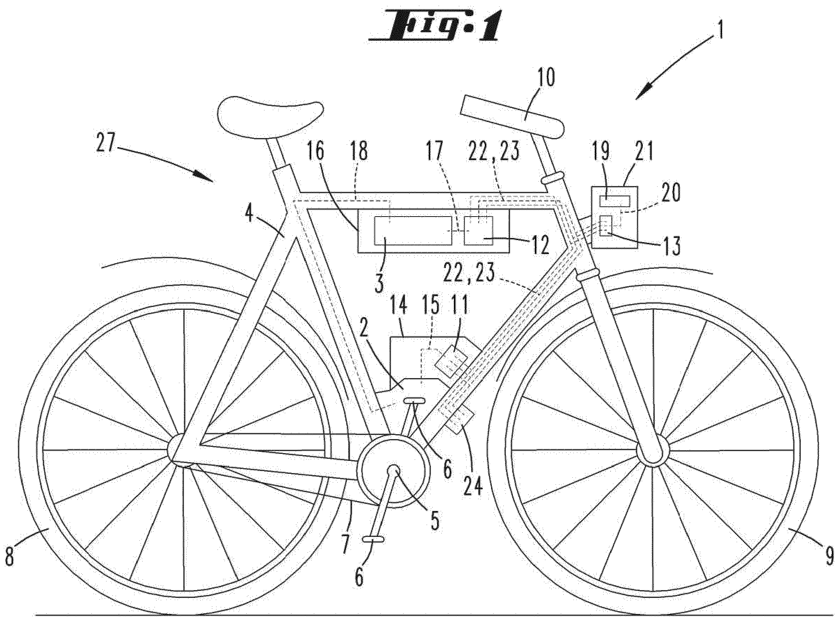

Figur 1 zeigt ein erfindungsgemäßes Elektrofahrrad 1 gemäß einem ersten Ausführungsbeispiel. Dabei handelt es sich um ein sog. Pedelec. Dieses umfasst einen Elektromotor 2 und zu dessen elektrischer Energieversorgung einen elektrischen Energiespeicher 3. Dieser ist wieder aufladbar, d.h. als Akkumulator ausgebildet. Das Elektrofahrrad 1 umfasst einen Rahmen 4, an dem ein Tretlager 5 mit zwei daran angebrachten Pedalen 6 gehalten ist. Das Tretlager 5 ist mittels einer Kette 7 zum Antrieb mit dem Hinterrad 8 verbunden. Das Vorderrad 9 ist mittels eines Lenkers 10 lenkbar.

Das Elektrofahrrad 1 umfasst in dem Beispiel eine erste Steuereinrichtung 11, eine zweite Steuereinrichtung 12 und eine dritte Steuereinrichtung 13. Die erste Steuereinrichtung 11 ist mit dem Elektromotor 2 in einem gemeinsamen Gehäuse 14 angeordnet und mittels einer schematisch gezeigten elektrischen Verbindung 15 an den Elektromotor 2 oder ggf. an eine gesonderte Motorsteuerung angeschlossen. Die erste Steuereinrichtung 11 ist dadurch fest an den Elektromotor 2 gekoppelt. Das Gehäuse 14 ist in dem Beispiel fest an dem Rahmen 4 angebracht, wobei der Elektromotor 2 im Betrieb Drehmoment auf das Tretlager 5 überträgt. Die erste Steuereinrichtung 11 umfasst einen Mikrochip, der zur Speicherung eines ersten Schlüsselcodes geeignet ist.

Die zweite Steuereinrichtung 12 ist gemeinsam mit dem Energiespeicher 3 in einem ihnen gemeinsamen Gehäuse 16 angeordnet und mittels einer elektrischen Verbindung 17 an den Energiespeicher 3 angeschlossen. Der Energiespeicher 3 ist seinerseits auch mittels einer elektrischen Verbindung 18 zur Stromversorgung an den Elektromotor 2 angeschlossen. Das Gehäuse 16 ist in dem Beispiel (auf nicht näher dargestellte Weise) abnehmbar an dem Rahmen 4 angebracht. Die zweite Steuereinrichtung 12 ist mittels des Gehäuses 16 und der Verbindung 17 fest an den Energiespeicher 3 gekoppelt, so dass diese Komponenten nur gemeinsam von dem Rahmen 4 abgenommen oder daran befestigt werden können. Die zweite Steuereinrichtung 12 umfasst einen Mikrocontroller, der zur Speicherung eines zweiten Schlüsselcodes geeignet ist.

Das Elektrofahrrad 1 umfasst in dem Beispiel eine Anzeige-/Bedieneinheit 19. Diese ist mittels einer elektrischen Verbindung 20 an die dritte Steuereinrichtung 13 angeschlossen und befindet sich mit ihr in einem gemeinsamen Gehäuse 21, das (auf nicht näher gezeigte Weise) lösbar an dem Rahmen 4 befestigt ist, aber stattdessen auch bspw. lösbar an dem Lenker 10 befestigt sein könnte. Die dritte Steuereinrichtung 13 enthält einen Mikrocontroller, der zur Speicherung eines dritten Schlüsselcodes geeignet ist. Da die dritte Steuereinrichtung 13 und die Anzeigebedieneinheit 19 elektrisch und mechanisch gekoppelt sind, lassen sie sich nur gemeinsam in ihrem Gehäuse 21 von dem Rahmen 4 abnehmen oder daran anbringen.

Das Elektrofahrrad 1 umfasst ein Datenübertragungssystem 22, das in dem Beispiel mittels eines Bus 23 realisiert ist. Die erste Steuereinrichtung 11 ist an das Datenübertragungssystem 22 fest angeschlossen. Die Gehäuse 16 und 21 besitzen (in den Figuren nicht näher gezeigte) Anschlüsse, so dass, wenn sich die Gehäuse 16, 21 an dem Rahmen 4 befinden, auch die Steuereinrichtungen 12 und 13 mit dem Datenübertragungssystem 22 verbunden sind. In diesem Zustand können die Steuereinrichtungen 11, 12 und 13 mittels einer zentralen, in den Figuren nicht gezeigten Stromversorgung aktiviert werden. Die Steuereinrichtungen 11, 12 und 13 sind in den Beispielen mittels Hard- und Software daran angepasst, dass jede Steuereinrichtung 11, 12, 13 nach der Aktivierung (also nach dem Einschalten einer)ihren eigenen Schlüsselcode, der vorzugsweise individuelle Daten beinhaltet, an jede der beiden anderen Steuereinrichtungen 11, 12, 13 mittels des Bus 23 zu übertragen. Dies bedeutet, dass jede Steuereinrichtung 11, 12, 13 von den beiden anderen Steuereinrichtungen 11, 12, 13 je einen Schlüsselcode empfängt. Die Steuereinrichtungen 11, 12, 13 sind daran angepasst, mittels jeweiliger Signalverarbeitungsmittel (diese können mittels Hard- und/oder Software verwirklicht sein) anhand vorgegebener Kriterien zu prüfen, ob ihr eigener Schlüsselcode zu den beiden empfangenen Schlüsselcodes passt.

Bei dem Ausführungsbeispiel ist vorgesehen, dass die erste Steuereinrichtung 11 ein erstes Steuersignal erzeugt, wenn sie feststellt, dass die drei Schlüsselcodes zueinander passen. Das erste Steuersignal kann bspw. ein Spannungsimpuls sein, der nur erzeugt wird, wenn die drei Schlüsselcodes zueinander passen. Das Steuersignal enthält somit die Information, dass die drei Schlüsselcodes zueinander passen. Die erste Steuereinrichtung überträgt ihr erstes Steuersignal an den Elektromotor 2 oder ggf. an eine ihm vorgelagerte Steuerung, wodurch der Elektromotor 2 betriebsbereit wird. Bleibt das erste Steuersignal aus, ist der Elektromotor 2 bzw. dessen Steuerung so eingestellt, dass er ein einer Drehrichtung der Pedale 6 entgegengesetztes Drehmoment erzeugt, um einen Diebstahl des Elektrofahrrads 1 zu verhindern.

Die zweite Steuereinrichtung 12 ist so ausgebildet, dass sie mittels der elektrischen Verbindung 17 ein zweites Steuersignal (bspw. einen Spannungsimpuls) an den Energiespeicher 3 oder eine ihm vorgelagerte Steuerung abgibt, wenn sie feststellt, dass die drei Schlüsselcodes zueinander passen. Der Spannungsimpuls stellt die Betriebsbereitschaft des Energiespeichers 3 her, d.h. ohne einen entsprechenden Spannungsimpuls gibt der elektrische Energiespeicher 3 keine Energie ab.

Die dritte Steuereinrichtung 13 ist daran angepasst, ein drittes Steuersignal mittels der elektrischen Verbindung 20 an die Anzeige-/Bedieneinheit 19 zu übertragen, wenn sie feststellt, dass die drei Schlüsselcodes zueinander passen. Erst durch das dritte Steuersignal wird die Anzeigebedieneinheit 19 in Betriebsbereitschaft versetzt.

Das Elektrofahrrad 1 besitzt eine Datenschnittstelle 24. Diese ist an das Datenübertragungssystem 22 angeschlossen. Dies ermöglicht es, mittels eines Datendiagnosegerätes (in den Figuren nicht gezeigt) Schlüsselcodes aus den Steuereinrichtungen 11, 12, 13 auszulesen bzw. anzuzeigen. Ebenfalls ermöglicht dies, mittels eines Dateneingabegerätes, das sich an die Schnittstelle anschließen lässt, bei Bedarf Schlüsselcodes in den Steuereinrichtungen 11, 12, 13 abzuspeichern.

Aus der vorangehenden Beschreibung wird deutlich, dass eine in Figur 1 insgesamt mit den Bezugszeichen 27 bezeichnete Wegfahrsperre des Elektrofahrrades 1 die Steuereinrichtungen 11, 12, 13, den Elektromotor 2, den Energiespeicher 3, die Anzeige-/Bedieneinheit 19 und das Datenübertragungssystem 22 sowie eine Datenschnittstelle 24 umfasst.

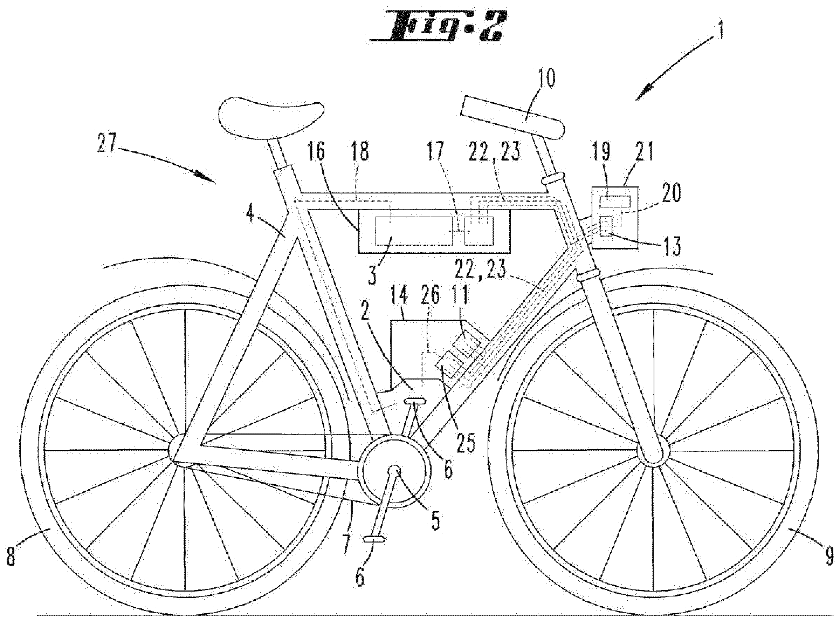

In Figur 2 ist ein erfindungsgemäßes Elektrofahrrad 1 gemäß einem zweiten Ausführungsbeispiel dargestellt. Dabei sind zu dem ersten Ausführungsbeispiel gleiche oder entsprechende Merkmale mit den gleichen Bezugszeichen versehen. Zusätzlich zu dem ersten Ausführungsbeispiel umfasst das in Figur 2 gezeigte Elektrofahrrad 1 eine Master-Steuereinrichtung 25, die in dem Beispiel (also nicht notwendig) mit in dem Gehäuse 14 angeordnet ist. Alternativ bestünde z.B. die Möglichkeit, dass sich die Master-Steuereinrichtung mit in dem Gehäuse 16 oder in dem Gehäuse 21 befindet und dadurch von dem Rahmen 4 abnehmbar wäre. Die Master-Steuereinrichtung 25 ist ebenfalls an das Datenübertragungssystem 22 angeschlossen.

In dem zweiten Ausführungsbeispiel sind die drei Steuereinrichtungen 11, 12, 13 daran angepasst, ihr jeweiliges Steuersignal mittels des Datenübertragungssystems 22 an die Master-Steuereinrichtung 25 zu übertragen. Die Master-Steuereinrichtung 25 ist ihrerseits daran angepasst, zu erkennen, ob sie von jedem der drei Steuereinrichtungen 11, 12, 13 je ein Steuersignal übertragen bekommt, welches Information enthält, dass alle Schlüsselcodes zueinander passen. Nur in diesem Fall erzeugt die Master-Steuereinrichtung 25 ihrerseits ein Master-Steuersignal, das sie mittels einer elektrischen Verbindung 26 zur Freischaltung an den Elektromotor 2 oder ggf. eine gesonderte Motorsteuerung überträgt. Es bestünde auch die Möglichkeit, dass die Master-Steuereinrichtung 25 mittels des Datenübertragungssystems zur Freischaltung, d.h. zur Bewirkung einer Betriebsbereitschaft, ein Master-Steuersignal an den Energiespeicher 3 und/oder an die Anzeige-/Bedieneinheit 19 sendet, um diese erst dadurch in Betriebsbereitschaft zu versetzen.

Hieraus wird deutlich, dass die Wegfahrsperre 27 des in Figur 2 gezeigten Elektrofahrrades 1 im Vergleich zu der in Figur 1 gezeigten Wegfahrsperre 27 zusätzlich eine Master-Steuereinrichtung 25 umfasst.

Alle offenbarten Merkmale sind (für sich, aber auch in Kombination untereinander) erfindungswesentlich. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

### Bezugszeichenliste

- 1: Elektrofahrrad
- 2: Elektromotor
- 3: Energiespeicher
- 4: Rahmen
- 5: Tretlager
- 6: Pedale
- 7: Kette
- 8: Hinterrad
- 9: Vorderrad
- 10: Lenker
- 11: erste Steuereinrichtung
- 12: zweite Steuereinrichtung
- 13: dritte Steuereinrichtung
- 14: Gehäuse
- 15: elektrische Verbindung
- 16: Gehäuse
- 17: elektrische Verbindung
- 18: elektrische Verbindung
- 19: Anzeige-/Bedieneinheit
- 20: elektrische Verbindung
- 21: Gehäuse
- 22: Datenübertragungssystem
- 23: Bus
- 24: Datenschnittstelle
- 25: Master-Steuereinrichtung
- 26: elektrische Verbindung

## Patentansprüche

1. Elektrofahrrad (1), insbesondere Pedelec oder E-Bike, umfassend einen Elektromotor (2) und einen elektrischen Energiespeicher (3), bei dem es sich insbesondere um einen Akkumulator handelt, zur Energieversorgung des Elektromotors (2), wobei das Elektrofahrrad (1) eine erste Steuereinrichtung (11) aufweist, die an den Elektromotor (2) gekoppelt ist und die dazu ausgebildet ist, einen ersten Schlüsselcode zu speichern, dass das Elektrofahrrad (1) eine zweite Steuereinrichtung (12) aufweist, die an den Energiespeicher (3) gekoppelt ist, und die dazu ausgebildet ist, einen zweiten Schlüsselcode zu speichern, **dadurch gekennzeichnet, dass** das Elektrofahrrad (1) eine Anzeige-/Bedieneinheit (19) und eine daran gekoppeltes dritte Steuereinrichtung (13), die zur Speicherung eines dritten Schlüsselcodes ausgebildet ist, umfasst, dass die Steuereinrichtungen (11, 12, 13) an ein Datenübertragungssystem (22), dass insbesondere mittels eines Bus realisiert ist, angeschlossen oder anschließbar sind, und dass die erste Steuereinrichtung (11) und die zweite Steuereinrichtung (12) und die dritte Steuereinrichtung (13) dazu ausgebildet sind, dass an zumindest eine unter ihnen bestimmte Steuereinrichtung (11, 12, 13) von den beiden anderen Steuereinrichtungen (11, 12, 13) deren jeweiliger Schlüsselcode übertragen wird, wobei die zumindest eine bestimmte Steuereinrichtung (11, 12, 13) dazu ausgebildet ist, anhand vorgegebener Kriterien zu erkennen, ob ihr Schlüsselcode zu den an sie übertragenen Schlüsselcodes der beiden anderen Steuereinrichtungen (11, 12, 13) passt.

2. Elektrofahrrad (1) gemäß Anspruch 1, **dadurch gekennzeichnet, dass** es sich bei der bestimmten Steuereinrichtung (11, 12, 13) um die erste Steuereinrichtung (11) oder um die zweite Steuereinrichtung (12) oder um die dritte Steuereinrichtung (13) handelt.

3. Elektrofahrrad (1) gemäß Anspruch 1 oder 2, **dadurch gekennzeichnet, dass** die Steuereinrichtungen (11, 12, 13) dazu ausgebildet sind, dass an eine jede Steuereinrichtung (11, 12, 13) von den jeweils beiden anderen Steuereinrichtungen (11, 12, 13) deren Schlüsselcode übertragen wird, wobei jede Steuereinrichtung (11, 12, 13) dazu ausgebildet ist, anhand vorgegebener Kriterien zu erkennen, ob ihr Schlüsselcode zu den an sie übertragenen Schlüsselcodes der anderen Steuereinrichtungen (11, 12, 13) passt.

4. Elektrofahrrad (1) gemäß einem oder mehreren der vorangehenden Ansprüche, **dadurch gekennzeichnet, dass** die erste Steuereinrichtung (11) dazu ausgebildet ist, ein Steuersignal zu erzeugen, das Information enthält, ob ihr Schlüsselcode zu dem an sie übertragenen Schlüsselcode oder zu den an sie übertragenen Schlüsselcodes passt, und das Steuersignal entweder an eine Master-Steuereinrichtung (25) oder zur Steuerung, insbesondere zum Ein- oder Ausschalten, an den Elektromotor (2) zu übertragen.

5. Elektrofahrrad (1) gemäß einem oder mehreren der vorangehenden Ansprüche, **dadurch gekennzeichnet, dass** die zweite Steuereinrichtung dazu ausgebildet ist, ein Steuersignal zu erzeugen, das Information enthält, ob ihr Schlüsselcode zu dem an sie übertragenen Schlüsselcode oder zu den an sie übertragenen Schlüsselcodes passt, und das Steuersignal entweder an eine Master-Steuereinrichtung (25) oder zur Steuerung, insbesondere zum Ein- oder Ausschalten, an den Energiespeicher (3) zu übertragen.

6. Elektrofahrrad (1) gemäß einem oder mehreren der vorangehenden Ansprüche 2 bis 7, **dadurch gekennzeichnet, dass** die dritte Steuereinrichtung (13) dazu ausgebildet ist, ein Steuersignal zu erzeugen, das Information enthält, ob ihr Schlüsselcode zu dem an sie übertragenen Schlüsselcode oder zu den an sie übertragenen Schlüsselcodes passt, und das Steuersignal entweder an eine Master-Steuereinrichtung (25) oder zur Steuerung, insbesondere zum Ein- oder Ausschalten, an die Anzeige-Bedieneinheit (19) zu übertragen.

7. Elektrofahrrad (1) gemäß einem oder mehreren der vorangehenden Ansprüche, **dadurch gekennzeichnet, dass** die Master-Steuereinrichtung (25) dazu ausgebildet ist, zu erkennen, ob ein an sie übertragenes Steuersignal Information enthält oder alle an sie übertragenen Steuersignale jeweils Information enthält, dass alle Schlüsselcodes zueinander passen, und nur in diesem Fall eine Freischaltung des Elektromotors (2) und/oder des Energiespeichers (3) und/oder der Anzeige-/Bedieneinheit (19) für den Betrieb des Elektrofahrrades (1) zu veranlassen.

8. Elektrofahrrad (1) gemäß einem oder mehreren der vorangehenden Ansprüche, **dadurch gekennzeichnet, dass** die Master-Steuereinrichtung (25) dazu ausgebildet ist, zu erkennen, ob ein an sie übertragenes Steuersignal Information enthält oder alle an sie übertragenen Steuersignale jeweils Information enthält, dass alle Schlüsselcodes zueinander passen, und anderenfalls zu veranlassen, dass die erste Steuereinrichtung (11) ein Bremsdrehmoment des Elektromotors (2) bewirkt und/oder zu veranlassen, dass eine Warnsignalerzeugungseinrichtung des Elektrofahrrades (1), die insbesondere eine Lichtquelle, eine Tonquelle, eine Funkquelle oder dergleichen enthält, ein Warnsignal aussendet.

9. Elektrofahrrad (1) gemäß einem oder mehreren der vorangehenden Ansprüche, **dadurch gekennzeichnet, dass** die erste Steuereinrichtung (11) und der Elektromotor( 2) in einem ihnen gemeinsamen Gehäuse (14) angeordnet sind und/oder dass die zweite Steuereinrichtung (12) und der Energiespeicher (3) in einem ihnen gemeinsamen, insbesondere lösbar an dem Rahmen (4) des Elektrofahrrads (1) angebrachten, Gehäuse (16) angeordnet sind und/oder dass die dritte Steuereinrichtung (13) und die Anzeige-/Bedieneinheit (19) in einem ihnen gemeinsamen, insbesondere lösbar an dem Rahmen (4) oder dem Lenker (10) des Elektrofahrrads (1) angebrachten, Gehäuse (21) angeordnet sind.

10. Elektrofahrrad (1) gemäß einem oder mehreren der vorangehenden Ansprüche, **dadurch gekennzeichnet, dass** das Elektrofahrrad (1) eine Datenschnittstelle (24) aufweist, die an das Datenübertragungssystem (22) angeschlossen ist oder anschließbar ist und die dazu ausgebildet ist, Schlüsselcodes wahlweise aus Steuereinrichtungen (11, 12, 13) auszulesen oder darin abzuspeichern.

11. Elektrofahrrad (1) gemäß einem oder mehreren der vorangehenden Ansprüche, **dadurch gekennzeichnet, dass** das Elektrofahrrad (1) ein wahlweise ein- und ausschaltbares Stromversorgungssystem für die erste Steuereinrichtung (11), die zweite Steuereinrichtung (12) und insbesondere für die dritte Steuereinrichtung (13) aufweist.

12. Verfahren zum Betrieb eines Elektrofahrrades (1), umfassend die Verfahrensschritte:
- Bereitstellen eines Elektrofahrrades (1) gemäß einem oder mehreren der vorangehenden Ansprüche,
- Verwenden der Steuereinrichtungen (11, 12, 13) zur Prüfung, ob ihre Schlüsselcodes zueinander passen.

13. Verfahren gemäß dem vorangehenden Anspruch, **dadurch gekennzeichnet, dass** das Verfahren vor der Prüfung, ob die Schlüsselcodes zueinander passen, den Verfahrensschritt umfasst:
- Anschließen der zweiten Steuereinrichtung (12) und/oder der dritten Steuereinrichtung (13) an das Datenübertragungssystem (22).

14. Verfahren gemäß einem oder beiden der Ansprüche 13 und 14, **dadurch gekennzeichnet, dass** das Verfahren als Verfahrensschritt umfasst:
- Bereitstellen eines Datendiagnosegerätes, Anschließen des Datendiagnosegerätes an die Datenschnittstelle (24) und Auslesen von zumindest einem Schlüsselcode aus einer Speichereinrichtung (11, 12, 13) oder aus mehreren Speichereinrichtungen (11, 12, 13), und/oder
- Bereitstellen eines Dateneingabegerätes, Anschließen des Dateneingabegerätes an die Datenschnittstelle (24) und Eingeben von zumindest einem Schlüsselcode in eine Speichereinrichtung (11, 12, 13) oder in mehrere Speichereinrichtungen (11, 12, 13).

15. Wegfahrsperre für ein Elektrofahrrad, insbesondere für ein Pedelec oder für ein E-Bike, wobei die Wegfahrsperre umfasst drei Steuereinrichtung die konfiguriert sind, um die Schritte des Verfahrens nach einem der vorangehenden Ansprüche 12-14 auszuführen.

## Claims

1. Electric bicycle (1), in particular pedelec or E-bike, comprising an electric motor (2) and an electrical energy store (3), which is a rechargeable battery, in particular, for supplying energy to the electric motor (2), wherein the electric bicycle (1) comprises a first control device (11), which is coupled to the electric motor (2) and which is configured to store a first key code, wherein the electric bicycle (1) comprises a second control device (12), which is coupled to the energy store (3) and which is configured to store a second key code, **characterized in that** the electric bicycle (1) comprises a display/operator control unit (19) and a third control device (13) coupled thereto, said third control device being configured for storing a third key code, **in that** the control devices (11, 12, 13) are connected or connectable to a data transmission system (22), which is realized by means of a bus, in particular, and **in that** the first control device (11) and the second control device (12) and the third control device (13) are configured to the effect that at least one control device (11, 12, 13) determined among them has transmitted to it from the other two control devices (11, 12, 13) the respective key code thereof, wherein the at least one determined control device (11, 12, 13) is configured to identify, on the basis of predefined criteria, whether its key code matches the key codes of the other two control devices (11, 12, 13) that have been transmitted to it.

2. Electric bicycle (1) according to Claim 1, **characterized in that** the determined control device (11, 12, 13) is the first control device (11) or the second control device (12) or the third control device (13).

3. Electric bicycle (1) according to Claim 1 or 2, **characterized in that** the control devices (11, 12, 13) are configured to the effect that each control device (11, 12, 13) has transmitted to it from the respective other two control devices (11, 12, 13) the key code thereof, wherein each control device (11, 12, 13) is configured to identify, on the basis of predefined criteria, whether its key code matches the key codes of the other control devices (11, 12, 13) that have been transmitted to it.

4. Electric bicycle (1) according to one or more of the preceding claims, **characterized in that** the first control device (11) is configured to generate a control signal containing information as to whether its key code matches the key code that has been transmitted to it or the key codes that have been transmitted to it, and to transmit the control signal either to a master control device (25) or, for the purpose of control, in particular for the purpose of switching on or off, to the electric motor (2).

5. Electric bicycle (1) according to one or more of the preceding claims, **characterized in that** the second control device is configured to generate a control signal containing information as to whether its key code matches the key code that has been transmitted to it or the key codes that have been transmitted to it, and to transmit the control signal either to a master control device (25) or, for the purpose of control, in particular for the purpose of switching on or off, to the energy store (3).

6. Electric bicycle (1) according to one or more of the preceding Claims 2 to 7, **characterized in that** the third control device (13) is configured to generate a control signal containing information as to whether its key code matches the key code that has been transmitted to it or the key codes that have been transmitted to it, and to transmit the control signal either to a master control device (25) or, for the purpose of control, in particular for the purpose of switching on or off, to the display/operator control unit (19).

7. Electric bicycle (1) according to one or more of the preceding claims, **characterized in that** the master control device (25) is configured to identify whether a control signal that has been transmitted to it contains information or all control signals that have been transmitted to it in each case contains information that all key codes match one another, and only in this case to instigate an enabling of the electric motor (2) and/or of the energy store (3) and/or of the display/operator control unit (19) for the operation of the electric bicycle (1).

8. Electric bicycle (1) according to one or more of the preceding claims, **characterized in that** the master control device (25) is configured to identify whether a control signal that has been transmitted to it contains information or all control signals that have been transmitted to it in each case contains information that all key codes match one another, and otherwise to cause the first control device (11) to bring about a braking torque of the electric motor (2) and/or to cause a warning signal generating device of the electric bicycle (1), which device contains in particular a light source, a sound source, a radio source or the like, to emit a warning signal.

9. Electric bicycle (1) according to one or more of the preceding claims, **characterized in that** the first control device (11) and the electric motor (2) are arranged in a housing (14) common to them, and/or **in that** the second control device (12) and the energy store (3) are arranged in a housing (16) common to them, which is fitted in particular releasably to the frame (4) of the electric bicycle (1), and/or **in that** the third control device (13) and the display/operator control unit (19) are arranged in a housing (21) common to them, which is fitted in particular releasably to the frame (4) or the handlebars (10) of the electric bicycle (1).

10. Electric bicycle (1) according to one or more of the preceding claims, **characterized in that** the electric bicycle (1) comprises a data interface (24), which is connected or connectable to the data transmission system (22) and which is configured optionally to read out key codes from control devices (11, 12, 13) or to store them therein.

11. Electric bicycle (1) according to one or more of the preceding claims, **characterized in that** the electric bicycle (1) comprises a power supply system optionally switchable on and off for the first control device (11), the second control device (12) and in particular for the third control device (13) .

12. Method for operating an electric bicycle (1), comprising the following method steps:
- providing an electric bicycle (1) according to one or more of the preceding claims,
- using the control devices (11, 12, 13) for checking whether their key codes match one another.

13. Method according to the preceding claim, **characterized in that**, before the checking whether the key codes match one another, the method comprises the following method step:
- connecting the second control device (12) and/or the third control device (13) to the data transmission system (22).

14. Method according to one or both of Claims 13 and 14, **characterized in that** the method comprises as method step:
- providing a data diagnosis apparatus, connecting the data diagnosis apparatus to the data interface (24) and reading out at least one key code from one storage device (11, 12, 13) or from a plurality of storage devices (11, 12, 13), and/or
- providing a data input apparatus, connecting the data input apparatus to the data interface (24) and inputting at least one key code into one storage device (11, 12, 13) or into a plurality of storage devices (11, 12, 13).

15. Immobilizer for an electric bicycle, in particular for a pedelec or for an E-bike, wherein the immobilizer comprises three control devices which are configured to carry out the steps of the method according to any of the preceding Claims 12-14.

## Revendications

1. Vélo électrique (1), notamment Pédélec ou E-bike, comprenant un moteur électrique (2) et un réservoir d'énergie électrique (3), notamment un accumulateur, destiné à fournir de l'énergie au moteur électrique (2), le vélo électrique (1) comportant un premier dispositif de commande (11) qui est accouplé au moteur électrique (2) et qui est conçu pour mémoriser un premier code clé, le vélo électrique (1) comportant un deuxième dispositif de commande (12) qui est accouplé au réservoir d'énergie (3) et qui est conçu pour mémoriser un deuxième code clé, **caractérisé en ce que** le vélo électrique (1) comprend une unité d'affichage/de commande (19) et un troisième dispositif de commande (13) qui est accouplé à celle-ci et qui est conçu pour mémoriser un troisième code clé, **en ce que** les dispositifs de commande (11, 12, 13) sont ou peuvent être raccordés à un système de transmission de données (22), en particulier au moyen d'un bus, et **en ce que** le premier dispositif de commande (11) et le deuxième dispositif de commande (12) et le troisième dispositif de commande (13) sont conçus pour transférer à au moins un dispositif de commande (11, 12, 13), déterminé par eux, à partir des deux autres dispositifs de commande (11, 12, 13) le code clé respectif, l'au moins un dispositif de commande déterminé (11, 12, 13) étant conçu pour détecter, sur la base de critères spécifiés, si son code clé correspond aux codes clés des deux autres dispositifs de commande (11, 12, 13) qui lui sont transmis.

2. Vélo électrique (1) selon la revendication 1, **caractérisé en ce que** le dispositif de commande déterminé (11, 12, 13) est le premier dispositif de commande (11) ou le deuxième dispositif de commande (12) ou le troisième dispositif de commande (13).

3. Vélo électrique (1) selon la revendication 1 ou 2, **caractérisé en ce que** les dispositifs de commande (11, 12, 13) sont conçus pour transmettre à un dispositif de commande (11, 12, 13), à partir des deux autres dispositifs de commande (11, 12, 13), leur code clé, chaque dispositif de commande (11, 12, 13) étant conçu pour détecter, sur la base de critères spécifiés, si son code clé correspond aux codes clés des autres dispositifs de commande (11, 12, 13) qui lui sont transmis.

4. Vélo électrique (1) selon l'une au moins des revendications précédentes, **caractérisé en ce que** le premier dispositif de commande (11) est conçu pour générer un signal de commande qui contient une information permettant de savoir si son code clé correspond ou non au code clé qui lui est transmis ou aux codes clés qui lui sont transmis et pour transmettre le signal de commande soit à un dispositif de commande maître (25) soit, en vue de la commande, notamment de l'activation ou la désactivation, au moteur électrique (2).

5. Vélo électrique (1) selon l'une au moins des revendications précédentes, **caractérisé en ce que** le deuxième dispositif de commande est conçu pour générer un signal de commande qui contient une information permettant de savoir si son code clé correspond au code clé qui lui est transmis ou aux codes clés qui lui sont transmis et pour transmettre le signal de commande soit à un dispositif de commande maître (25) soit, en vue de la commande, notamment de l'activation ou la désactivation, au réservoir d'énergie (3).

6. Vélo électrique (1) selon l'une au moins des revendications précédentes 2 à 7, **caractérisé en ce que** le troisième dispositif de commande (13) est conçu pour générer un signal de commande qui contient une information permettant de savoir si son code clé correspond au code clé qui lui est transmis ou aux codes clés qui lui sont transmis et pour transmettre le signal de commande soit à un dispositif de commande maître (25) soit, en vue de la commande, notamment de l'activation ou la désactivation, à l'unité d'affichage/de commande (19).

7. Vélo électrique (1) selon l'une au moins des revendications précédentes, **caractérisé en ce que** le dispositif de commande maître (25) est conçu pour détecter si un signal de commande qui lui est transmis contient une information, ou si tous les signaux de commande qui lui sont transmis contiennent chacun une information, permettant de savoir si tous les codes clés correspondent les uns aux autres et, uniquement dans ce cas, pour ordonner l'activation du moteur électrique (2) et/ou de l'accumulateur d'énergie (3) et/ou de l'unité d'affichage/de commande (19) pour faire fonctionner le vélo électrique (1).

8. Vélo électrique (1) selon l'une au moins des revendications précédentes, **caractérisé en ce que** le dispositif de commande maître (25) est conçu pour détecter si un signal de commande qui lui est transmis contient une information, ou tous les signaux de commande qui lui sont transmis contiennent chacun une information, permettant de savoir si tous les codes clés correspondent les uns aux autres et pour ordonner dans le cas contraire que le premier dispositif de commande (11) induise un couple de freinage du moteur électrique (2) et/ou pour ordonner qu'un dispositif de génération de signal d'avertissement du vélo électrique (1), qui contient en particulier une source de lumière, une source sonore, une source radio ou similaire, émette un signal d'avertissement.

9. Vélo électrique (1) selon l'une au moins des revendications précédentes, **caractérisé en ce que** le premier dispositif de commande (11) et le moteur électrique (2) sont disposés dans un boîtier commun (14) et/ou **en ce que** le deuxième dispositif de commande (12) et le réservoir d'énergie (3) sont disposés dans un boîtier commun (16), notamment monté de façon amovible sur le cadre (4) du vélo électrique (1), et/ou **en ce que** le troisième dispositif de commande (13) et l'unité d'affichage/de commande (19) sont disposés dans un boîtier commun (21), notamment monté de manière amovible sur le cadre (4) ou le guidon (10) du vélo électrique (1).

10. Vélo électrique (1) selon l'une au moins des revendications précédentes, **caractérisé en ce que** le vélo électrique (1) comporte une interface de données (24) qui est ou peut être raccordée au système de transmission de données (22) et qui est conçue pour lire ou mémoriser sélectivement des codes clés dans des dispositifs de commande (11, 12, 13).

11. Vélo électrique (1) selon l'une au moins des revendications précédentes, **caractérisé en ce que** le vélo électrique (1) comporte un système d'alimentation électrique sélectivement activable et désactivable destiné au premier dispositif de commande (11), au deuxième dispositif de commande (12) et en particulier au troisième dispositif de commande (13).

12. Procédé de fonctionnement d'un vélo électrique (1), comprenant les étapes suivantes :
- fournir un vélo électrique (1) selon l'une au moins des revendications précédentes,
- utiliser les dispositifs de commande (11, 12, 13) pour vérifier si leurs codes clés correspondent les uns aux autres.

13. Procédé selon la revendication précédente, **caractérisé en ce que** le procédé comprend, avant de vérifier si les codes clés correspondent les uns aux autres, l'étape suivante :
- raccorder le deuxième dispositif de commande (12) et/ou le troisième dispositif de commande (13) au système de transmission de données (22).

14. Procédé selon l'une des revendications 13 et 14 ou les deux, **caractérisé en ce que** le procédé comprend les étapes suivantes :
- fournir un dispositif de diagnostic de données, raccorder le dispositif de diagnostic de données à l'interface de données (24) et lire au moins un code clé dans un dispositif de mémorisation (11, 12, 13) ou une pluralité de dispositifs de mémorisation (11, 12, 13), et/ou
- fournir une unité d'entrée de données, raccorder l'unité d'entrée de données à l'interface de données (24) et entrer au moins un code clé dans un dispositif de mémorisation (11, 12, 13) ou une pluralité de dispositifs de mémorisation (11, 12, 13) .

15. Anti-démarrage destiné à un vélo électrique, notamment un Pédélec ou un E-bike, l'anti-démarrage comprenant trois dispositifs de commande conçus pour exécuter les étapes du procédé selon l'une des revendications précédentes 12 à 14.
